# EUROPEAN PATENT SPECIFICATION

(11) **EP 2 747 874 B1**
(45) Date of publication and mention of the grant of the patent: **08.07.2015**
(21) Application number: 12759471.1
(22) Date of filing: 19.09.2012
(51) Int. Cl.: B01D 53/14, B01D 53/18, B04C 3/04, B04C 5/26, B04C 5/30

(54) **SYSTEM AND METHOD FOR REMOVING CONTAMINANTS FROM A CONTAMINATED GAS STREAM**
SYSTEM UND VERFAHREN ZUM ENTFERNEN VON SCHMUTZPARTIKELN AUS EINEM KONTAMINIERTEN GASSTROM
SYSTÈME ET PROCÉDÉ POUR L'ÉLIMINATION DE CONTAMINANTS D'UN COURANT DE GAZ CONTAMINÉ

(30) Priority: 23.09.2011 EP 11182579
(43) Date of publication of application: 02.07.2014
(73) Proprietor: Shell Internationale Research Maatschappij B.V., 2596 HR The Hague (NL)
(72) Inventor: HAMRE, Hans Christian, NO-0277 Oslo (NO); VAN SANTEN, Helmar, NL-1031 HW Amsterdam (NL)
(74) Representative: Matthezing, Robert Maarten
(86) International application number: PCT/EP2012/068390
(87) International publication number: WO 2013/041545

(56) References cited:
- WO-A1-2009/140993
- FR-A1- 2 601 264
- US-A- 4 061 476
- US-A- 4 562 054

## Description

The present invention relates to a system and method for removing contaminants from a contaminated gas stream, such as a contaminated natural gas or air stream.

Various processes are known to remove contaminating components, such as water, hydrates, carbon dioxide (CO₂) and/or hydrogen sulphide (H₂S), from a gas stream such as a natural gas stream. The processes may be based on physical and/or chemical separation techniques. Physical separation techniques use differences in e.g. boiling, condensation and/or freezing points of the various contaminating components to selectively remove one or more of these components in a fractionating column, or differences in density to separate components with different densities in a centrifugal or cyclonic separator. Chemical separation techniques may employ selective absorption or catalytic reactions to convert a contaminating component into a composition that can be easily separated.

WO 2009/140993 discloses a method and system for removing contaminants from a contaminated gas stream using a venturi section which is located upstream of a centrifugal fluid separation section, in which venturi section the contaminated gas stream is induced to flow at a higher axial velocity than in the centrifugal fluid separation section.

US 4 061 476 discloses a gas purification method wherein gas, containing at least one contaminant and/or noxious component, is contacted with a solid sorption agent.

There is a constant desire for new and alternative systems and methods for removing contaminants from a contaminated gas stream.

It is an object of the present invention to provide a system and method for removing contaminants from a contaminated gas stream in an efficient and economical manner, even if the gas comprises a large fraction of contaminants.

It is a further object of the present invention to provide an alternative system and method for removing H₂O, CO₂ and/or H₂S from a gas stream.

One or more of the above or other objects are achieved according to the present invention by providing a system for removing contaminants from a contaminated gas stream using a liquid absorbent, the system at least comprising a first and a second separation unit,
wherein the first separation unit comprises at least:
- a first separator having an inlet for a contaminated gas stream to be separated, a first outlet for separated gas and a second outlet for separated liquid absorbent;
- a rising conduit for transporting the contaminated gas stream to the inlet of the first separator;
- a conduit for removing the separated gas at the first outlet of the first separator; and
- a conduit for removing separated liquid absorbent at the second outlet of the first separator;
wherein the second separation unit comprises at least:
- a second separator having an inlet for a stream to be separated, a first outlet for separated gas and a second outlet for separated liquid absorbent;
- a rising conduit for transporting a contaminated stream to the inlet of the second separator;
- a conduit for removing separated gas at the first outlet of the second separator; and
- a descending conduit for removing separated liquid absorbent at the second outlet of the second separator;
wherein the descending conduit of the second separation unit is fluidly connected to the rising conduit of the first separation unit and wherein the height of the descending conduit of the second separation unit is selected such that during use the hydrostatic force in the descending conduit of the second separation unit can induce the liquid absorbent and the contaminated gas in the rising conduit of the first separation unit to flow to the inlet of the first separator.

An advantage of the present invention is that contaminants can be removed in an efficient and economical manner, requiring only a very low level of maintenance. Also, if maintenance would be desired, no people would need to go into the system for inspection purposes resulting in safer maintenance operations and less downtime.

A further advantage of the present invention is that the system is extremely versatile; as an example, intermediate processing steps (such as heating, cooling, pressurizing, de-pressurizing, addition of fresh absorbent, etc.) can be performed on the various streams, also after construction, as the various conduits are readily accessible. Also, as use is made of a hydrostatic force generated in the system, no pump (or at least less pumping power) is needed in providing the absorbent to the contaminated gas stream to be separated. Also no level controllers are needed.

An even further advantage of the present invention is that the system allows subsea, or more generally, underwater applications. Also, as the system is relatively insensitive to motion, it can be used on floating media, such as a floating platform. Further, the physical height of the system is typically lower than a conventional absorption tower and the system can be very compact (small diameter piping and small vessels); due to its versatility (the shape of the system is not fixed), it can be easily adapted to the needs of a specific location.

The contaminated gas stream is not limited in any way and may for example be a natural gas stream, a combustion gas, synthesis gas, an air stream, etc. Preferably, the contaminated gas is a methane-rich stream such as natural gas, containing at least 30 wt.% methane, preferably at least 50 wt.% methane.

The person skilled in the art will readily understand that the contaminant is not limited to certain compounds and may include a broad variety of compounds. However, the present invention is in particular suitable for the removal of H₂O, CO₂ and/or H₂S from a contaminated gas stream such as natural gas or a combustion gas.

Also, the absorbent to be used in the present invention is not limited in any way. As the person skilled in the art is familiar with the use of an absorbent for the removal of contaminants from a contaminated gas stream, this is not further discussed here in detail. The absorbent is a liquid. It is preferred that the absorbent is configured to absorb H₂O, H₂S and/or CO₂ from the contaminated gas stream. It is preferred that the absorbent is a glycol or an amine. If desired, two or more absorbents may be used in the present invention, either at the same time or consecutively.

The first, second and optional further separation units as used in the present invention may be any type of separation unit and are not limited in any way; preferably, one or more (or all) of the separation units are absorption units.

The first, second and optional further separators as used in the present invention may be any type of separator and are not limited in any way. Preferably the separators are centrifugal separators, for example as described in above-mentioned WO 2009/140993.

The person skilled in the art will understand how to arrange the system of the present invention to obtain the desired hydrostatic force, dependent on the prevailing circumstances and properties of the contaminated gas stream and absorbent(s). Typically, the hydrostatic force (or pressure) in the descending conduit of the second separation unit is larger than the accumulated pressure loss in the flow between the second outlet of the second separator and the point (herein also called "connector") where the descending conduit feeds into the rising conduit, hence allowing the absorbent coming from the descending conduit of the second separation unit to mix with the contaminated gas stream (whilst absorbing at least part of the contaminants in the contaminated gas stream) in the rising conduit of the first separation unit and flow into the first separator. To this end, the height of the descending conduit of the second separation unit is preferably from 0.1 to 100 m, preferably above 0.3 m, more preferably above 0.5 m and preferably below 50 m, more preferably below 30 m.

The descending conduit of the second separation unit is connected to the rising conduit of the first separation unit at a connector. If desired, the connector may be arranged such that improved mixing takes place between the absorbent coming from the descending conduit of the second separation unit and the contaminated gas stream. This improved mixing may for example be achieved by including a sprayer in the connector for spraying absorbent from the descending conduit of the second separation unit into the rising conduit of the first separation unit.

Further it is preferred that the descending conduit of the second separation unit contains no pump.

According to an especially preferred embodiment of the present invention the system comprises a third separation unit, comprising at least:
- a third separator having an inlet for a stream to be separated, a first outlet for separated gas and a second outlet for separated liquid absorbent;
- a rising conduit for transporting a contaminated stream to the inlet of the third separator;
- a conduit for removing separated gas at the first outlet of the third separator; and
- a descending conduit for removing separated liquid absorbent at the second outlet of the second separator;
wherein the descending conduit of the third separation unit is fluidly connected to the rising conduit of the second separation unit and wherein the height of the descending conduit of the third separation unit is selected such that during use the hydrostatic force in the descending conduit of the third separation unit can induce the liquid absorbent (and preferably also the contaminated gas stream) in the rising conduit of the second separation unit to flow to the inlet of the second separator.

More preferably, the system comprises fourth and optional further separation units comprising the same or similar components as the second separation unit. Again, it is preferred that the descending conduit of the n+1^{th} separation unit is connected to the rising conduit of the n^{th} separation unit at a connector. Also, preferably, the respective descending conduits contain no pump.

Further it is preferred that the first, second and optional third and further separation units are located side-by-side.

In a further aspect, the present invention provides a method for removing contaminants from a contaminated gas stream, the method at least comprising:
(a) providing a contaminated gas stream to be separated;
(b) inducing the contaminated gas stream to flow through a rising conduit into a first separator whilst contacting the contaminated stream with a liquid absorbent;
(c) separating the stream fed into the first separator thereby obtaining a separated gas and separated liquid absorbent;
(d) removing the separated liquid absorbent as obtained in step (c);
(e) removing the separated gas and inducing it to flow through a rising conduit into a second separator whilst contacting it with liquid absorbent;
(f) separating the stream fed into the second separator thereby obtaining a separated gas and separated liquid absorbent;
(g) removing the separated liquid absorbent as obtained in step (c) through a descending conduit; and
(h) removing the separated gas;
wherein the descending conduit feeds into the rising conduit in step (b) and wherein the height of the descending conduit is selected such that the hydrostatic force in the descending conduit induces the liquid absorbent to flow co-currently with the contaminated gas stream through the rising conduit into the first separator.

Preferably, the liquid absorbent is mixed with the contaminated gas stream whilst flowing through the rising conduit.

Hereinafter the invention will be further illustrated by the following non-limiting drawing. Herein shows:

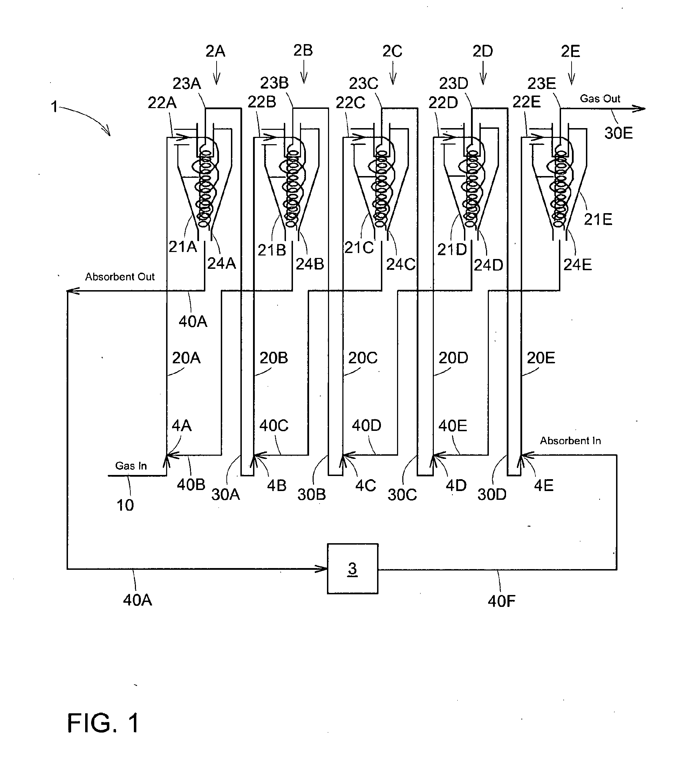

Fig. 1 schematically a schematic side view of a system in accordance with the present invention.

For the purpose of this description, same reference numbers refer to same or similar components.

Fig. 1 shows a simplified system 1 in accordance with the present invention for removing contaminants from a contaminated gas stream 10. In the embodiment of Fig. 1, the system comprises five separation units 2A-2E (typically absorption units), located side-by-side. Of course, more separation units may be present. Further, the system 1 comprises a recovery unit 3 for recovering and optionally storing absorbent used in the system 1.

The first separation unit 2A comprises at least:
- a first separator 21A having an inlet 22A for a contaminated gas stream to be separated, a first outlet 23A for separated gas and a second outlet 24A for separated liquid absorbent;
- a rising conduit (or "riser") 20A for (substantially upwards) transporting the contaminated gas stream to the inlet 22A of the first separator 21A;
- a conduit 30A for removing the separated gas at the first outlet 23A of the first separator 21A; and
- a (usually descending) conduit 40A for removing separated liquid absorbent at the second outlet 23A of the first separator 21A.

The second separation unit 2B comprises at least:
- a second separator 21B having an inlet 22B for a stream to be separated, a first outlet 23B for separated gas and a second outlet 24B for separated liquid absorbent;
- a rising conduit 20B for transporting a contaminated stream (coming from the outlet 23A of the first separator 21A) to the inlet 22B of the second separator 21B;
- a conduit 30B for removing separated gas at the first outlet 23B of the second separator 21B; and
- a descending conduit (or "downcomer") 40B for (substantially downwards) removing separated liquid absorbent at the second outlet 24B of the second separator 21B.

The third, fourth and fifth separation units 2C, 2D and 2E comprise the same elements as the second separation unit 2B. The conduits 30A-30E are shown in Fig. 1 as descending conduits as well; although it is indeed preferred that conduits 30A-30E transport the gases therein in a substantially downwards manner, it is not excluded that said conduits flow in a substantially horizontal or vertical manner.

The descending conduit 40B of the second separation unit 2B is fluidly connected to the rising conduit 20A of the first separation unit 2A at a connector 4A. Similarly, the descending conduits 40C-40E are connected to the respective rising conduits 20B-D of the respective preceding separation units at connectors 4B-4D. At connector 4E fresh absorbent is fed as stream 40F (from recovery unit 3) to the rising conduit 20E of the fifth separation unit 2E. Of course, fresh absorbent may be fed at other places as well, such as at connectors 4A-4D.

The height of the descending conduit 40B of the second separation unit 2B is selected such that during use the hydrostatic force in the descending conduit 40B of the second separation unit 2B can induce the liquid absorbent (coming from stream 40B) and the contaminated gas stream (fed via line 10) in the rising conduit 20A of the first separation unit 2A to flow co-currently to the inlet 22A of the first separator 21A. The heights of the descending conduits 40C-40D are selected similarly. Typically, the height of the descending conduits is from 0.1 to 100 m, preferably from 0.3 to 50 m. As use is made of the hydrostatic force, no pump is needed in the descending conduits 40B-40E. The hydrostatic force that drives the liquid flow into the gas stream at location 4A-4D, is a result of the partial liquid filling of the descending conduits 40B-40E that occurs when separated liquid from the separators 21B-21E is drained into the descending conduits 40B-40E. The actual hydrostatic force is a function of the gas/liquid interface level inside the descending conduits 40B-40E, relative to the location 4A-4D. The actual gas/liquid interface level will be a function of a number of parameters such as fluid properties (e.g. density, viscosity), gas flow pressure loss in the system (depending on actual gas flow rate) and solvent/gas mass ratio requirements. The solvent/gas mass ratio is controlled by the solvent mass flow that is imposed on the system at mixing point 4E.

During use of the system 1, a contaminated gas stream 10 to be separated is provided. The contaminated gas stream 10 is induced to flow through the rising conduit 20A into the first separator 21A whilst being contacted (at connector 4A) with a liquid absorbent (coming from stream 40B); thus, in rising conduit 20A (as well as in the other rising conduits 20B-20E) the liquid absorbent and contaminated gas flow co-currently. In the rising conduit 20A absorption of contaminants in the contaminated gas by the liquid absorbent takes place. In the first separator 21A stream 20A is separated thereby obtaining separated gas 30A and separated liquid absorbent 40A.

The separated liquid absorbent 40A is removed and sent to the recovery unit 3 for recovering and optionally storing absorbent used in the system 1. The absorbent is fed to the fifth separation unit 2E at connector 4E as stream 40F and flows via line 20E, fifth separator 21E, line 40E, line 20D, etc. to first separator 21A, where it is removed again as stream 40A for recovery in recovery unit 3.

The separated gas 30A is sent to connector 4B and induced to flow through the rising conduit 20B into the second separator 21B whilst contacting it with absorbent (coming from stream 40C). The stream 20B fed into the second separator 21B is separated thereby obtaining separated gas 30B and separated liquid absorbent 40B. The separated absorbent 40B is removed through the descending conduit 40B and sent to connector 4A. The separated gas 30B is similarly processed through separation units 2C-2E and eventually removed from system 1 as stream 30E. If needed, stream 30E may be further processed, e.g. to remove other contaminants, to be liquefied, etc.

Whilst the liquid absorbent and contaminated gas streams flow co-currently in the rising conduits 20A-20E, the global direction thereof is counter-currently; the liquid absorbent as fed as stream 40F at connector 4E moves to connector 4A, whilst the contaminated gas stream moves from connector 4A to 4E.

For inducing the contaminated gas stream 10 (and liquid absorbent coming from stream 40B) to flow through the rising conduit 20A into the first separator 21A, the descending conduit 40B feeds into the rising conduit 20A, whilst using the hydrostatic force in the descending conduit 40B. The rising conduit 20A (as well as the other rising conduits 20B-20E) may contain internals, such as a mesh, to improve the contact between absorbent and contaminated gas. As the person skilled in the art is fully familiar with such internals, this is not further discussed here.

A part of the liquid absorbent in the descending conduit 40B may be sent to the connector 4B (instead of to the connector 4A); a similar set-up may be arranged for descending conduits 40C-40E. Also, a part of the absorbent fed into conduit 20A may have been directly obtained from recovery unit 3.

The absorbent may be cooled in the recovery unit 3 or in between the separation units 2A-2E, e.g. in the descending conduits 40B-40E. As the absorbent may leave the first separating unit 2A (at outlet 24A) at a higher pressure than when being fed at connector 4E, less pumping power is needed in the recovery unit 3 for recovering the absorbent. As the person skilled in the art readily understands how the absorbent can be recovered (e.g. by boiling off the absorbed contaminant), this is not further discussed here in detail.

The person skilled in the art will readily understand that many modifications may be made without departing from the scope of the invention. As an example, other intermediate processing steps (such as heating, cooling, pressurizing, de-pressurizing, addition of fresh absorbent, etc.) can be performed on the various streams (e.g. the rising conduits 20B-E and descending conduits 40B-40E), also as a bolt-on after construction, as the various conduits are readily accessible.

The present invention is described below with reference to the following Example, which is not intended to limit the scope of the present invention in any way.

### Example 1

A contaminated natural gas stream containing 10 vol.% CO₂, was fed at a pressure of 40°C and a pressure of 60 bar to a system as described in Figure 1 above (the descending conduits 40B, 40C, 40D and 40E had a height of 5 m), whilst using amine (ADIP-X, obtainable from the Royal Dutch Shell group) as a liquid absorbent. The pressures at various locations in the system are given in Table 1 below.

**Table 1 - pressures (in bar)**

| | 4 | 22 | 23 | 24 | 30 |
|---|---|---|---|---|---|
| A | 60.00 | 59.89 | 59.78 | 59.86 | 59.72 |
| B | 59.72 | 59.61 | 59.50 | 59.58 | 59.43 |
| C | 59.43 | 59.33 | 59.21 | 59.30 | 59.15 |
| D | 59.15 | 59.05 | 58.93 | 59.02 | 58.87 |
| E | 58.87 | 58.76 | 58.65 | 58.73 | 58.59 |

| | | | | | |
|---|---|---|---|---|---|
| The cell in row A and column 4 indicates the pressure in point 4A in Figure 1; the cell in row B and column 22 the pressure at 22B; etc. | | | | | |

The gas separated at outlet 30E contained 1 vol.% CO₂, i.e. at pipeline specification.

## Claims

1. A system (1) for removing contaminants from a contaminated gas stream (10) using a liquid absorbent, the system (1) at least comprising a first and a second separation unit (2A, 2B),
wherein the first separation unit (2A) comprises at least:
- a first separator (21A) having an inlet (22A) for a contaminated gas stream to be separated, a first outlet (23A) for separated gas and a second outlet (24A) for separated liquid absorbent;
- a rising conduit (20A) for transporting the contaminated gas stream to the inlet (22A) of the first separator (21A);
- a conduit (30A) for removing the separated gas at the first outlet (23A) of the first separator (21A); and
- a conduit (40A) for removing separated liquid absorbent at the second outlet (23A) of the first separator (21A);
wherein the second separation unit (2B) comprises at least:
- a second separator (21B) having an inlet (22B) for a stream to be separated, a first outlet (23B) for separated gas and a second outlet (24B) for separated liquid absorbent;
- a rising conduit (20B) for transporting a contaminated stream to the inlet (22B) of the second separator (21B);
- a conduit (30B) for removing separated gas at the first outlet (23B) of the second separator (21B); and
- a descending conduit (40B) for removing separated liquid absorbent at the second outlet (24B) of the second separator (21B);
wherein the descending conduit (40B) of the second separation unit (2B) is fluidly connected to the rising conduit (20A) of the first separation unit (2A) and wherein the height of the descending conduit (40B) of the second separation unit (2B) is selected such that during use the hydrostatic force in the descending conduit (40B) of the second separation unit (2B) can induce the liquid absorbent in the rising conduit (20A) of the first separation unit (2A) to flow co-currently with the contaminated gas stream to the inlet (22A) of the first separator (21A).

2. The system (1) according to claim 1, wherein the height of the descending conduit (40B) of the second separation unit (2B) is from 0.1 to 100 m.

3. The system (1) according to claim 1 or 2, wherein the descending conduit (40B) of the second separation unit (2B) is connected to the rising conduit (20A) of the first separation unit (2A) at a connector (4A).

4. The system (1) according to any one of claims 1-3, wherein the descending conduit (40B) of the second separation unit (2B) contains no pump.

5. The system (1) according to any one of claims 1-4, wherein the system comprises a third separation unit (2C), comprising at least:
- a third separator (21C) having an inlet (22C) for a stream to be separated, a first outlet (23C) for separated gas and a second outlet (24C) for separated liquid absorbent;
- a rising conduit (20C) for transporting a contaminated stream to the inlet (22C) of the third separator (21C);
- a conduit (30C) for removing separated gas at the first outlet (23C) of the third separator (21C); and
- a descending conduit (40C) for removing separated liquid absorbent at the second outlet (24C) of the second separator (21B);
wherein the descending conduit (40C) of the third separation unit (2C) is fluidly connected to the rising conduit (20B) of the second separation unit (2B) and wherein the height of the descending conduit (40C) of the third separation unit (2C) is selected such that during use the hydrostatic force in the descending conduit (40C) of the third separation unit (2C) can induce the liquid absorbent in the rising conduit (20B) of the second separation unit (2B) to flow to the inlet (22B) of the second separator (21B).

6. The system (1) according to any one of claims 1-5, wherein the system comprises fourth and optional further separation units (2D,2E,...) comprising the same components as the second separation unit (2B) as defined above.

7. The system (1) according to any one of claims 1-6, wherein the first, second and optional third and further separation units (2A, 2B,...) are located side-by-side.

8. A method for removing contaminants from a contaminated gas stream (10), the method at least comprising:
(a) providing a contaminated gas stream (10) to be separated;
(b) inducing the contaminated gas stream to flow through a rising conduit (20A) into a first separator (21A) whilst contacting the contaminated stream with a liquid absorbent;
(c) separating the stream fed into the first separator (21A) thereby obtaining a separated gas (30A) and separated liquid absorbent (40A);
(d) removing the separated liquid absorbent (40A) as obtained in step (c);
(e) removing the separated gas (30A) and inducing it to flow through a rising conduit (20B) into a second separator (21B) whilst contacting it with liquid absorbent;
(f) separating the stream fed into the second separator (21B) thereby obtaining a separated gas (30B) and separated liquid absorbent (40B);
(g) removing the separated liquid absorbent as obtained in step (c) through a descending conduit (40B); and
(h) removing the separated gas (30B);
wherein the descending conduit feeds (40B) into the rising conduit (20A) in step (b) and wherein the height of the descending conduit (40B) is selected such that the hydrostatic force in the descending conduit (40B) induces the liquid absorbent to flow co-currently with the contaminated gas stream through the rising conduit (20A) into the first separator (21A).

## Patentansprüche

1. System (1) zum Entfernen von Schmutzpartikeln aus einem kontaminierten Gasstrom (10) unter Verwendung eines Flüssigkeitsabsorptionsmittels, wobei das System (1) mindestens eine erste und eine zweite Trenneinheit (2A, 2B) umfasst,
wobei die erste Trenneinheit (2A) mindestens Folgendes umfasst:
- einen ersten Trenner (21A) mit einem Einlass (22A), damit ein kontaminierter Gasstrom getrennt wird, einen ersten Auslass (23A) für getrenntes Gas und einen zweiten Auslass (24A) für getrenntes Flüssigkeitsabsorptionsmittel;
- eine steigende Leitung (20A) zum Transportieren des kontaminierten Gasstroms zum Einlass (22A) des ersten Trenners (21A);
- eine Leitung (30A) zum Entfernen des getrennten Gases am ersten Auslass (23A) des ersten Trenners (21A); und
- eine Leitung (40A) zum Entfernen des getrennten Flüssigkeitsabsorptionsmittels am zweiten Auslass (23A) des ersten Trenners (21A);
wobei die zweite Trenneinheit (2B) mindestens Folgendes umfasst:
- einen zweiten Trenner (21B) mit einem Einlass (22B), damit ein Strom getrennt wird, einen ersten Auslass (23B) für getrenntes Gas und einen zweiten Auslass (24B) für getrenntes Flüssigkeitsabsorptionsmittel;
- eine steigende Leitung (20B) zum Transportieren eines kontaminierten Gasstroms zum Einlass (22B) des zweiten Trenners (21B);
- eine Leitung (30B) zum Entfernen des getrennten Gases am ersten Auslass (23B) des zweiten Trenners (21B); und
- eine abfallende Leitung (40B) zum Entfernen des getrennten Flüssigkeitsabsorptionsmittels am zweiten Auslass (24B) des zweiten Trenners (21B);
wobei die abfallende Leitung (40B) der zweiten Trenneinheit (2B) fluidisch mit der steigenden Leitung (20A) der ersten Trenneinheit (2A) verbunden ist, und wobei die Höhe der abfallenden Leitung (40B) der zweiten Trenneinheit (2B) derart ausgewählt ist, dass während der Verwendung die hydrostatischen Kraft in der abfallenden Leitung (40B) der zweiten Trenneinheit (2B) das Flüssigkeitsabsorptionsmittel in der steigenden Leitung (20A) der ersten Trenneinheit (2A) veranlassen kann, gleichströmend mit dem kontaminierten Gasstrom in den Einlass (22A) des ersten Trenners (21A) zu fließen.

2. System (1) nach Anspruch 1, wobei die Höhe der abfallenden Leitung (40B) der zweiten Trenneinheit (2B) von 0,1 to 100 m beträgt.

3. System (1) nach Anspruch 1 oder 2, wobei die abfallende Leitung (40B) der zweiten Trenneinheit (2B) mit der steigenden Leitung (20A) der ersten Trenneinheit (2A) an einem Verbindungselement (4A) verbunden ist,

4. System (1) nach einem der Ansprüche 1 - 3, wobei die abfallende Leitung (40B) der zweiten Trenneinheit (2B) keine Pumpe enthält.

5. System (1) nach einem der Ansprüche 1 - 4, wobei das System eine dritte Trenneinheit (2C) umfasst, die mindestens Folgendes umfasst:
- einen dritten Trenner (21C) mit einem Einlass (22C), damit ein Strom getrennt wird, einen ersten Auslass (23C) für getrenntes Gas und einen zweiten Auslass (24C) für getrenntes Flüssigkeitsabsorptionsmittel;
- eine steigende Leitung (20C) zum Transportieren eines kontaminierten Stroms an den Einlass (22C) des dritten Trenners (21C);
- eine Leitung (30C) zum Entfernen des getrennten Gases am ersten Auslass (23C) des dritten Trenners (21C); und
- eine abfallende Leitung (40C) zum Entfernen des getrennten Flüssigkeitsabsorptionsmittels am zweiten Auslass (24C) des zweiten Trenners (21B);
wobei die abfallende Leitung (40C) der dritten Trenneinheit (2C) fluidisch mit der steigenden Leitung (20B) der zweiten Trenneinheit (2B) verbunden ist, wobei die Höhe der abfallenden Leitung (40C) der dritten Trenneinheit (2C) derart ausgewählt ist, dass während der Verwendung die hydrostatische Kraft in der abfallenden Leitung (400) der dritten Trenneinheit (2C) das Flüssigkeitsabsorptionsmittel in die steigende Leitung (20B) der zweiten Trenneinheit (2B) veranlassen kann, in den Einlass (22B) des zweiten Trenners (21B) zu fließen.

6. System (1) nach einem der Ansprüche 1 - 5, wobei das System eine vierte und optional weitere Trenneinheiten (2D, 2E ...) umfasst, umfassend die gleichen Komponenten wie die zweite Trenneinheit (2B), wie oben definiert.

7. System (1) nach einem der Ansprüche 1 - 6, wobei die erste, zweite und optional dritte und weitere Trenneinheiten (2A, 2B,...) Seite an Seite angeordnet sind.

8. Verfahren zum Entfernen von Schmutzpartikeln aus einem kontaminierten Gasstrom (10), wobei das Verfahren mindesten Folgendes umfasst:
(a) Bereitstellen eines kontaminierten Gasstroms (10), der getrennt werden soll;
(b) Veranlassen des kontaminierten Gasstroms, durch eine steigende Leitung (20A) in einen ersten Trenner (21A) zu fließen, während der kontaminierte Strom mit einem Flüssigkeitsabsorptionsmittel in Kontakt gebracht wird;
(c) Trennen des Stroms, der in den ersten Trenner (21A) gespeist wird, dadurch Erhalt eines getrennten Gases (30A) und eines getrennten Flüssigkeitsabsorptionsmittels (40A);
(d) Entfernen des getrennte Flüssigkeitsabsorptionsmittels (40A), wie in Schritt (c) erhalten;
(e) Entfernen des getrennten Gases (30A) und Veranlassen desselben, durch eine steigende Leitung (20B) in einen zweiten Trenner (21B) zu fließen, während es mit Flüssigkeitsabsorptionsmittel in Kontakt gebracht wird;
(f) Trennen des Stroms, der in den zweiten Trenner (21B) gespeist wird, dadurch Erhalt eines getrennten Gases (30B) und eines getrennten Flüssigkeitsabsorptionsmittels (40B);
(g) Entfernen des getrennten Flüssigkeitsabsorptionsmittels wie in Schritt (c) erhalten, durch eine abfallende Leitung (40B); und
(h) Entfernen des getrennten Gases (30B) wobei die abfallende Leitung in die steigende Leitung (20A) in Schritt (b) speist, wobei die Höhe der abfallenden Leitung (40B) derart ausgewählt ist, dass die hydrostatische Kraft in der abfallenden Leitung (40B) das Flüssigkeitsabsorptionsmittel veranlasst, gleichströmend mit dem kontaminierten Gasstrom durch die steigende Leitung (20A) in den ersten Trenner (21A) zu fließen.

## Revendications

1. Système (1) d'élimination de contaminants d'un courant de gaz contaminé (10) à l'aide d'un absorbant liquide, le système (1) comprenant au moins une première et une deuxième unités de séparation (2A, 2B),
dans lequel la première unité de séparation (2A) comprend au moins :
- un premier séparateur (21A) ayant une entrée (22A) pour un courant de gaz contaminé à séparer, une première sortie (23A) pour le gaz séparé et une deuxième sortie (24A) pour l'absorbant liquide séparé ;
- un premier conduit ascendant (20A) pour le transport du courant de gaz contaminé à l'entrée (22A) du premier séparateur (21A) ;
- un conduit (30A) pour retirer le gaz séparé à la première sortie (23A) du premier séparateur (21A) ; et
- un conduit (40A) pour retirer l'absorbant liquide séparé à la deuxième sortie (23A) du premier séparateur (21A) ;
dans lequel la deuxième unité de séparation (2B) comprend au moins :
- un deuxième séparateur (21B) ayant une entrée (22B) pour un courant à séparer, une première sortie (23B) pour le gaz séparé et une deuxième sortie (24B) pour l'absorbant liquide séparé ;
- un conduit ascendant (20B) pour le transport d'un courant contaminé à l'entrée (22B) du deuxième séparateur (21B) ;
- un conduit (30B) pour retirer le gaz séparé à la première sortie (23B) du deuxième séparateur (21B) ; et
- un conduit descendant (40B) pour retirer l'absorbant liquide séparé à la deuxième sortie (24B) du deuxième séparateur (21B) ;
dans lequel le conduit descendant (40B) de la deuxième unité de séparation (2B) est connecté du point de vue fluidique au conduit ascendant (20A) de la première unité de séparation (2A) et dans lequel la hauteur du conduit descendant (40B) de la deuxième unité de séparation (2B) est choisie de sorte qu'à l'emploi la force hydrostatique dans le conduit descendant (40B) de la deuxième unité de séparation (2B) puisse induire l'écoulement de l'absorbant liquide dans le conduit ascendant (20A) de la première unité de séparation (2A) à co-courant avec le courant de gaz contaminé vers l'entrée (22A) du premier séparateur (21A).

2. Système (1) selon la revendication 1, dans lequel la hauteur du conduit descendant (40B) de la deuxième unité de séparation (2B) est de 0,1 à 100 m.

3. Système (1) selon la revendication 1 ou 2, dans lequel le conduit descendant (40B) de la deuxième unité de séparation (2B) est connecté au conduit ascendant (20A) de la première unité de séparation (2A) au niveau d'un connecteur (4A).

4. Système (1) selon l'une quelconque des revendications 1 à 3, dans lequel le conduit descendant (40B) de la deuxième unité de séparation (2B) ne contient pas de pompe.

5. Système (1) selon l'une quelconque des revendications 1 à 4, dans lequel le système comprend une troisième unité de séparation (2C), comprenant au moins :
- un troisième séparateur (21C) ayant une entrée (22C) pour un courant à séparer, une première sortie (23C) pour le gaz séparé et une deuxième sortie (24C) pour l'absorbant liquide séparé ;
- un conduit ascendant (20C) pour transporter un courant contaminé à l'entrée (22C) du troisième séparateur (21C) ;
- un conduit (30C) pour retirer le gaz séparé à la première sortie (23C) du troisième séparateur (21C) ;
et
- un conduit descendant (40C) pour retirer l'absorbant liquide séparé à la deuxième sortie (24C) du deuxième séparateur (21B) ;
dans lequel le conduit descendant (40C) de la troisième unité de séparation (2C) est connecté du point de vue fluidique au conduit ascendant (20B) de la deuxième unité de séparation (2B) et dans lequel la hauteur du conduit descendant (40C) de la troisième unité de séparation (2C) est choisie de sorte qu'à l'emploi la force hydrostatique dans le conduit descendant (40C) de la troisième unité de séparation (2C) puisse induire l'écoulement de l'absorbant liquide dans le conduit ascendant (20B) de la deuxième unité de séparation (2B) vers l'entrée (22B) du deuxième séparateur (21B).

6. Système (1) selon l'une quelconque des revendications 1 à 5, dans lequel le système comprend une quatrième et d'autres unités de séparation éventuellement (2D, 2E, ...) comprenant les mêmes composants que la deuxième unité de séparation (2B) définie ci-dessus.

7. Système (1) selon l'une quelconque des revendications 1 à 6, dans lequel les premier, deuxième et troisième et autres unités de séparation éventuelles (2A, 2B, ...) sont situées côte à côte.

8. Procédé d'élimination de contaminants d'un courant de gaz contaminé (10), le procédé comprenant au moins :
(a) la fourniture d'un courant de gaz contaminé (10) à séparer ;
(b) l'induction d'un écoulement du courant de gaz contaminé à travers un conduit ascendant (20A) dans un premier séparateur (21A), pendant la mise en contact du courant contaminé avec un absorbant liquide ;
(c) la séparation du courant chargé dans le premier séparateur (21A) afin d'obtenir un gaz séparé (30A) et un absorbant liquide séparé (40A) ;
(d) le retrait de l'absorbant liquide séparé (40A) obtenu dans l'étape (c) ;
(e) le retrait du gaz séparé (30A) et l'induction d'un écoulement de celui-ci à travers un conduit ascendant (20B) dans un deuxième séparateur (21B) pendant la mise en contact de celui-ci avec un liquide absorbant ;
(f) la séparation du courant chargé dans le deuxième séparateur (21B) afin d'obtenir un gaz séparé (30B) et un absorbant liquide séparé (40B) ;
(g) le retrait de l'absorbant liquide séparé obtenu dans l'étape (c) à travers un conduit descendant (40B) ; et
(h) le retrait du gaz séparé (30B) ;
dans lequel le conduit descendant alimente (40B) dans le conduit ascendant (20A) dans l'étape (b) et dans lequel la hauteur du conduit descendant (40B) est choisie de sorte que la force hydrostatique dans le conduit descendant (40B) induise l'écoulement de l'absorbant liquide à co-courant avec le courant de gaz contaminé à travers le conduit ascendant (20A) dans le premier séparateur (21A).
